# EUROPEAN PATENT SPECIFICATION

(11) **EP 0 677 065 B1**
(45) Date of publication and mention of the grant of the patent: **16.04.1997**
(21) Application number: 94905989.3
(22) Date of filing: 03.01.1994
(51) Int. Cl.: C08F 8/06

(54) **EPOXIDIZED BLOCK COPOLYMERS**
EPOXYDIERTE BLOCKCOPOLYMERE
COPOLYMERES BLOCS EPOXYDISES

(30) Priority: 04.01.1993 US 352
(43) Date of publication of application: 18.10.1995
(73) Proprietor: EASTMAN CHEMICAL COMPANY, Kingsport, TN 37660 (US)
(72) Inventor: GEORGE, Scott, Ellery, Kingsport, TN 37664 (US)
(74) Representative: Wibbelmann, Jobst, Dr., Dipl.-Chem.
(86) International application number: US9400026
(87) International publication number: WO9415973

(56) References cited:
- EP-A- 0 498 426
- BE-A- 655 545
- DE-B- 1 111 399
- FR-A- 2 353 575
- US-A- 4 131 653

## Description

### FIELD OF THE INVENTION

This invention relates to a process for preparing selectively hydrogenated polydiene block copolymers with regiospecifically placed epoxy groups. The process involves polymerizing a conjugated diolefin under anionic polymerization conditions to form a living polydiene which is combined with a conjugated diolefin having a degree of substitution different than the previously mentioned conjugated diolefin to form a block copolymer which is reacted with hydrogen gas in the presence of a soluble transition metal catalyst and an organometallic reducing agent to form a selectively hydrogenated block copolymer, and epoxidizing the unsaturated sites of the non-hydrogenated blocks. This process allows a variety of structural geometries to be obtained in which the level of functionality is varied independent of molecular weight.

### BACKGROUND OF THE INVENTION

There are numerous references on the epoxidation of polydienes by either stoichiometric or catalytic procedures. For example, polyisoprene and polybutadiene have been epoxidized with peracetic acid and peroxyformic acid. In addition, m-chloroperbenzoic acid in chloroform solution has been used to epoxidize cis- and trans-1,4-polyisoprenes and polybutadienes. Catalytic procedures employing a tungsten-peroxo complex have been used to epoxidize unactivated alkenes, using hydrogen peroxide as the oxidant, without appreciable side reactions, in a heterogeneous environment. In the above examples, the amount of substitution may be accurately controlled to a level of a least 40 mole percent, however, the placement of the epoxy groups cannot be controlled. In addition, none of the systems are amenable to absolute regiospecific control of the epoxy groups.

Epoxidation of block copolymers containing one or more polystyrene blocks and one or more polydiene blocks by stoichiometric procedures is reported in U.S. Pat. Nos. 3,555,112, 4,051,199, 4,131,653 and 4,131,725. A catalytic procedure for epoxidation of styrene/butadiene block copolymers is described by X. Jian and A.S. Hay in the Journal of Polymer Science, Chem. Ed., 29, 547 (1991), wherein conversions of over 70 mole percent were obtained in the absence of side-reactions. Such stoichiometric and catalytic procedures for epoxidizing block copolymers containing one or more polystyrene blocks and one or more polydiene blocks, however, are regiospecific only by default since the polystyrene blocks are inert to epoxidation.

Block copolymers containing polyisoprene blocks and polybutadiene blocks have been selectively hydrogenated under conditions where the polybutadiene segments were completely saturated while the polyisoprene segments were left untouched by J.C. Falk in the Journal of Polymer Science, Pt. A-1, 9, 2617 (1971). Falk employed coordination catalysts to hydrogenate less substituted polyolefins while leaving more substituted polyolefins intact. Three catalyst systems were described, consisting of either Li/Co, Li/A1, or Ni/A1 combinations. The selectivity of these types of homogeneous catalysts was shown to be highly dependent on concentration, molar ratio of metals, and ligand type on the alkyl source. No further derivatization reactions of the selectively hydrogenated block copolymers were disclosed.

R. J. Hoxmeier in U.S. Pat. Nos. 4,879,349 and 5,001,199, discloses a process for selectively hydrogenating a polymer containing at least two different conjugated diolefins, one of which is more substituted at either of the olefinic carbon atoms. Hoxmeier discloses a diblock copolymer and a triblock copolymer. The diblock copolymer contains a polystyrene block and a random butadiene-isoprene copolymer block, where the butadiene units are selectively hydrogenated to form what amounts to an ethylene/1-butene/isoprene segment. The triblock copolymer contains polystyrene terminal blocks and a random butadiene-isoprene inner block where the butadiene units are selectively hydrogenated. The catalyst system employed is a combination of nickel octoate and trialkyl aluminum in a molar ratio of 1 to 1.5 - 2.8 for Al to Ni. Although these low ratios of Al to Ni generally result in a highly active catalyst, selectivity is obtained by employing a catalyst concentration of 0.1 to 0.001 millimoles of nickel per gram of polymer. The polymers produced by the hydrogenation process were limited to residual unsaturation contents of less than or equal to 40 mole percent.

European Patent App. No. 91300315.8 discloses elastomeric block copolymers which contain residual unsaturation in the terminal blocks only. Such elastomeric block copolymers do not include any diblock systems since triblocks are required to form an elastomeric network substantially free of non-load bearing chains. It is important to note that European Patent App. No. 91300315.8 specifies that the product should not be excessively crystalline, which would be deleterious to the elastomeric qualities of the product. Excessively crystalline was defined as containing over 10% crystallinity normalized to a polyethylene standard.

None of the references suggested the epoxidation of selectively hydrogenated block copolymers, which do not contain aromatic segments. In addition, the references did not discuss diblock systems or tapered block copolymers of any architecture. Moreover, it was not specified whether epoxidation would exhaustively or partially functionalize the substrate, and whether or not significant side reactions would cause a variation in the actual composition of matter.

### SUMMARY OF THE INVENTION

It is therefore an object of the present invention to provide a process for preparing a selectively hydrogenated polydiene block copolymer with regiospecifically placed epoxy groups, which is useful as a compatibilizer for polymer blends, said process comprising the following steps:
(I) polymerizing a conjugated diolefin in a solvent selected from the group consisting of polar and nonpolar solvents under anionic polymerization conditions to form a living polydiene;
(II) combining the polydiene of Step (I) with a conjugated diolefin having a degree of substitution different than the conjugated diolefin of Step (I) to form a block copolymer;
(III) reacting the block copolymer of Step (II) with hydrogen gas in the presence of a soluble transition metal catalyst and an organometallic reducing agent to form a selectively hydrogenated block copolymer wherein the less substituted blocks are at least 98% hydrogenated;
(IV) epoxidizing the unsaturated sites of the non-hydrogenated blocks.

The present invention is also directed to a selectively hydrogenated polydiene block copolymer with regiospecifically placed epoxy groups prepared by the above described process.

### BRIEF DESCRIPTION OF THE DRAWINGS

The invention will be more fully understood and further advantages will become apparent when reference is made to the following detailed description of the invention and the accompanying drawings in which:

FIG. 1 is a photomicrograph of a 80/20 weight percent PETG/polypropylene blend without any block copolymer compatibilizer at a magnification of 2000X.

FIG. 2 is a photomicrograph of a 75/20 weight percent PETG copolyester and polypropylene blend with 5.0 weight percent of 0.7K epoxidized polyisoprene-35K hydrogenated polybutadiene block copolymer at a magnification of 2000X.

### DESCRIPTION OF THE INVENTION

The present invention is concerned with a process for preparing a selectively hydrogenated polydiene block copolymer with regiospecifically placed epoxy groups. The process involves four steps. In the first step, a conjugated diolefin is polymerized under anionic polymerization conditions to form a living polydiene. The second step involves combining the polydiene of Step (I) with a conjugated diolefin having a degree of substitution different than the conjugated diolefin of Step (I) to form a block copolymer. Polymers and copolymers of conjugated diolefins are polymerized in both polar and nonpolar solution by contacting the conjugated diolefin(s) with an anionic initiating species.

Anionic initiating species include organolithium compounds, bimetallic compounds and alkali metal naphthalene complexes. Bimetallic compounds are obtained by reacting m-diisopropenylbenzene, 1,3-bis[1-phenylvinyl]benzene, or the various isomers of divinyl benzene with an appropriate alkyl lithium species such as sec-butyl lithium or n-butyl lithium. Other combinations are possible to achieve bimetallic compounds. Alkali metal complexes of aromatic hydrocarbons, particularly lithium, sodium or potassium naphthalene, also function as dianionic initiators in polar solvents, such as THF. The preferred anionic initiators, however, are organolithium compounds having the general formula, RLiₓ . In this formula, R is an aliphatic, aromatic, or cycloaliphatic group containing one or more carbon atoms and x is an integer from 1 to 20. Suitable organolithium compounds include: methyl lithium, ethyl lithium, n-butyl lithium, sec-butyl lithium, tert-butyl lithium, phenyl lithium, and naphthyl lithium. The preferred organolithium compounds are n-butyl- and sec-butyl lithium.

The anionic polymerization of the conjugated diolefin to form a living polydiene may be conducted in both polar and nonpolar solvents. In general, the solvent requirements are such that no acid hydrogens or other functionalities are present that would be reactive with a living anionic species, resulting in unwanted initiator deactivation or chain termination reactions. Suitable nonpolar solvents include linear, branched, and cyclic chain hydrocarbons containing 4 to 12 carbons atoms, such as cyclohexane and heptane. In addition, aromatic and alkyl substituted aromatic hydrocarbons containing 6 to 12 carbon atoms, such as benzene, toluene, xylene and tetralin may be used.

Polar solvents, such as ethers, cyclic ethers, amines, and mixtures thereof, function as the polymerization medium alone or as cosolvents with hydrocarbon diluents. Although reactions may be conducted in a purely polar solvent medium such as THF, it is preferred to incorporate polar compounds in the reaction medium as modifiers or additives. In polar modified anionic polymerizations of conjugated diolefins, the reaction kinetics are accelerated and the microstructure of the resulting polydienes is significantly altered in comparison to anionic polymerizations conducted in completely nonpolar environments. For example, polybutadiene can exist in either the 1,4 or 1,2 microstructural forms as follows: 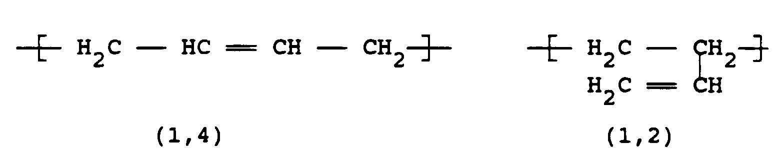 The terms 1,2- and 1,4-microstructure or units as used in this application refer to the products of polymerization obtained, respectively, by the 1,2- and 1,4- additions of monomer units into the growing polymer chain. It is obvious, however, that different microstructural forms will be obtained for polydienes which vary in structure and number of substituents.

The substituents directly attached to the olefinic carbon atoms of the conjugated diolefins may be hydrogen, alkyl, cycloalkyl, halogen, aryl, cyano, alkyl ether, aryl ether, and combinations thereof. The preferred substituents are hydrogen, halogen, and alkyl substituted conjugated dienes. The polar modifiers may be present in amounts up to 100% of the diluent volume, thereby serving as the polymerization solvent or cosolvent, but preferably will constitute less than 10% of the solvent volume, and most preferably less than 1% of the total solvent.

The polar modifiers may be any compound that does not contain an acid hydrogen or other functionality deleterious to a living anion. Suitable examples include linear, branched, cyclic aliphatic and cyclic aromatic amines and ethers. Specific polar modifiers include: tetrahydrofuran, dipiperidinoethane, tetramethylethylenediamine, diglyme, anisole, trialkylamines, crown ethers, triglyme, and ethyl ether.

The anionic polymerization reaction of the conjugated diolefin to form a living polydiene should be conducted at a temperature in the range of -100°C. to 200°C., preferably in the range of 0°C. to 100°C. Most preferably, the polymerization temperature should be in the range of 25°C. to 75°C. under reduced pressure or greater than ambient pressure of inert gas. Any of the known anionic polymerization methods such as sequential monomer addition, exploitation of monomer mixtures of different reactivities to result in tapered block formation, multifunctional initiation species, and polymer chain coupling techniques may be used. The polymer architectures include diblock, multiblock, radial, tapered and random block. Certain polymer architectures may be preferred in certain embodiments. For example, diblocks and tapered blocks, whereby a gradual change is effected from a block composed of one monomer to a block composed of a second monomer, are useful as precursors to a compatibilizer for polymer blends containing polyolefins.

The conjugated diolefin monomers useful in the present invention have a minimum of 4 carbon atoms and are of the general formula: 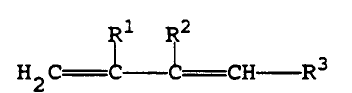 In the above formula, R¹, R² and R³ independently represent hydrogen, alkyl, aryl, halogen, alkyl ether, and aryl ether. Specific conjugated diolefins include: isoprene, 1,3-butadiene, 1,3-pentadiene (piperylene), 2,3-dimethyl-1,3-butadiene, 2-methyl-1,3-pentadiene, 1,3-hexadiene, 2-chloro-1,3-butadiene (chloroprene), 2-phenyl-1,3-butadiene, myrcene, and 2,3-diphenyl-1,3-butadiene. Preferably, the conjugated diolefin is isoprene, 1,3-butadiene, or chloroprene. Mixtures of the various conjugated diolefins in one or more of the blocks is within the scope of this invention, as long as the overall level of substitution in a block remains consistent to allow selective hydrogenation.

Vinyl aromatic hydrocarbon monomers may be used in the invention in one or more of the block segments to facilitate the control of certain physical parameters, such as glass transition temperature (Tg), hardness, solubility, and permeability. Representative examples include: styrene, α-methylstyrene; mono-, di-, and multialkylated styrenes (e.g. p-methylstyrene, and p-tert-butyl styrene), vinyl naphthalene and alkylated derivatives thereof, vinyl anthracene, and vinyl toluene. Preferred are styrene, α-methylstyrene, p-methylstyrene, and vinyl toluene. The most preferred vinyl aromatic hydrocarbon monomer is styrene.

It is critical that the conjugated diolefin monomers be carefully selected, since incorporation of at least two diene monomers varying in degree of substitution on one or more of the olefinic carbon atoms is necessary. This point is illustrated by examining a block copolymer composed of isoprene containing blocks and 1,3-butadiene containing blocks. 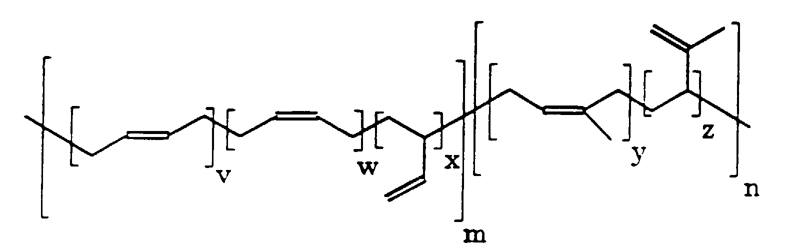 The polyisoprene block which exists predominately in either a cis-1,4 or 3,4 addition enchainment has a degree of substitution of 3 for the 1,4-units and 2 for the 3,4-units. The polybutadiene block which exists in either a cis-1,4, trans-1,4, or 1,2 addition enchainment has a degree of substitution of 2 for the 1,4 units and 1 for the 1,2 units. It is important to note that 1,4 addition yields backbone double bonds and 1,2 or 3,4 addition yield pendant double bonds. Thus, the block copolymer structural requirements may be generally stated as one block segment having more steric hindrance around the double bond than the other block.

The molecular weight of the more substituted polydiene block is generally lower than the molecular weight of the less substituted polydiene block. A reasonable range of molecular weights for the less substituted polydiene block is 1000 to 1,000,000 daltons, preferably 5000 to 500,000 daltons, and more preferably 10,000 to 250,000 daltons. The molecular weight range for the more substituted polydiene block is 100 to 250,000 daltons, preferably 300 to 100,000 daltons, and more preferably 500 to 50,000 daltons. The total molecular weight for the di- and multiblock copolymers is in the range of 5000 to 2,000,000 daltons, preferably 10,000 to 500,000 daltons, and more preferably 15,000 to 300,000 daltons.

Step (III) involves reacting the block copolymer of Step (II) with hydrogen gas in the presence of a soluble transition metal catalyst and an organometallic reducing agent to form a selectively hydrogenated block copolymer. It is critical that the hydrogenation procedure saturate the less-substituted polydiene block. Partial hydrogenation of the more substituted polydiene block can be varied. The less substituted blocks should be at least 98% hydrogenated, preferably, greater than 99% hydrogenated. The hydrogenation may be conducted in the same solvent that was used for the anionic polymerization.

For example, hydrogenating a block copolymer composed of isoprene containing blocks and 1,3-butadiene containing blocks results in a poly[isoprene/(ethylene/1-butene)] block copolymer having the structure:

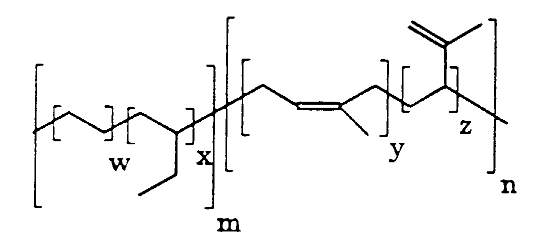

Solvents useful in this invention include linear and cyclic aliphatic hydrocarbons such as cyclohexane or n-heptane, and aromatic hydrocarbons such as benzene and toluene. The concentration of the copolymer in the solvent is such that the copolymer remains in solution for the duration of the process. A typical concentration of copolymer in solvent is in the range of 1 to 50 weight percent, preferably 5 to 20 weight percent. It is also possible to hydrogenate a low viscosity liquid copolymer in the absence of a solvent.

The hydrocarbon solvent may contain polar additives such as linear and cyclic amines or ethers. The hydrogenation reaction is performed at partial pressures ranging from slightly above ambient to 5,000 psig (34576 KPa). A low pressure method is preferred where partial hydrogen pressures of 5 (136 KPa) to 200 psig, (1480 KPa) preferably 10 (170 KPa) to 100 psig (791 KPa) are employed at catalyst levels ranging from 0.1 to 0.5 mole percent, preferably 0.2 to 0.3 mole percent of transition metal based on total moles of less-substituted unsaturated units. At higher pressures, namely 100 (791 KPa) to 1000 psig (6996 KPa), it is possible to use catalyst levels from 0.01 to 0.1 mole percent of transition metal based on total moles of the less-substituted unsaturated units. In either method it is preferred to utilize a reaction temperature between 20°C. and 100°C., more preferably 50°C. to 90°C. Reaction times are dependent on the actual hydrogenation conditions employed, such as catalyst level, temperature, and so forth. Preferably, the polymerization time is in the range of 10 to 1200 minutes and the hydrogenation times range from 30 to 300 minutes.

The hydrogenation catalysts are comprised of one or more transition metals combined with an organometallic reducing agent. Although suitable transition metal compounds may be selected from Group IV-B, V-B, VI-B, or VIII of the periodic table, preferred are the Group VIII metals, particularly nickel and cobalt alkoxides and carboxylates, most preferred are nickel(II)octoate and cobalt(II)octoate. The octoate ligand is most often present as the 2-ethylhexanoate geometrical isomeric form.

Organometallic reducing agents are most often selected from Group I-A, II-A, or III-A metal alkyls, hydrides, and alkyl halides. Preferred are alkyl aluminum, alkyl lithium, and aryl lithium compounds, for example, n-butyl lithium, sec-butyl lithium, phenyl lithium, triethyl aluminum, tri-isobutylaluminum, and triethylaluminum chloride. The molar ratio of reducing metal to transition metal must be accurately controlled, since it is well known that the hydrogenation selectivity of any catalyst combination described above will vary widely for a particular metal combination. In general, the molar ratio of reducing metal to transition metal is between 1:1 and 10:1, preferably between 1:1 and 7:1, and more preferably between 2:1 and 5:1. Preferred are the aluminum-nickel, aluminum-cobalt, and lithium-cobalt systems. Combinations of reducing agents may also be used.

The catalyst may be prepared in the same solvents that are used to conduct the hydrogenation reaction by adding the reducing agent to a solution of the transition metal compound. Another variation is to combine separate feeds of transition metal solution and reducing agent solution simultaneously. A further method is to form the catalyst in situ by adding the transition metal and organometallic reducing agent directly to the polymerization reactor. In all of the above cases it is desirable that formation of the catalyst be conducted at temperatures in the range of 20°C. to 80°C., preferably less than 60°C. at concentrations less than 10% (w/v) of catalyst to solvent.

Step (IV) involves epoxidizing the unsaturated sites of the non-hydrogenated blocks by stoichiometric or catalytic procedures. The epoxidation may be conducted in the same solvent and reactor as that used for the polymerization and hydrogenation reactions. Although the epoxidation may be carried out to nearly 100% conversion of the original number of double bonds this is not usually performed since ring-opening side reactions occur at higher epoxy contents. The extent of epoxidation varies from 0.1 to 80 mole percent of the original number of unsaturated units.

There are four generic structures obtainable by the epoxidation of precursors manufactured from the selective hydrogenation process. The following examples represent polyisoprene blocks containing cis-1,4-addition units. A larger number of epoxidized structures may be drawn if the polyisoprene block contains some 3,4-addition units. This invention includes any specialized isomeric forms that may be obtained not only by controlling the addition mode, i.e., 1,4 versus 3,4, but also any geometrical isomer forms, i.e., cis or trans, that are possible. Selective catalytic hydrogenation and/or epoxidation reactions are often partially selective to a certain isomer of a given polydiene.
(a.) Exhaustively epoxidized, selectively hydrogenated block copolymer 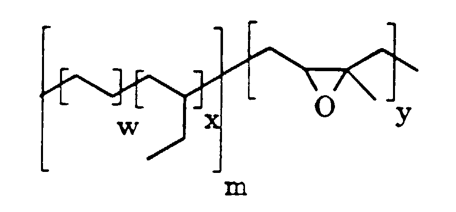
(b.) Partially epoxidized, selectively hydrogenated block copolymer 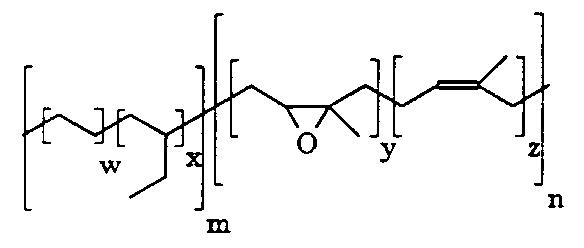
(c.) Partially epoxidized, semi-selectively hydrogenated block copolymer 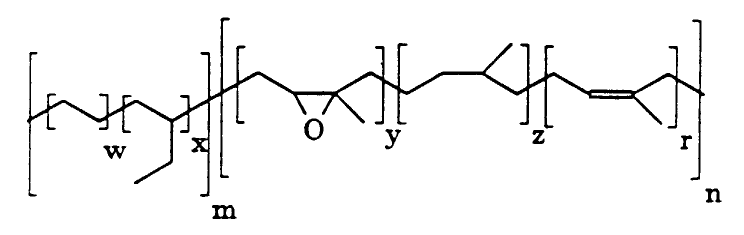
(d.) Exhaustively epoxidized, semi-selectively hydrogenated block copolymer

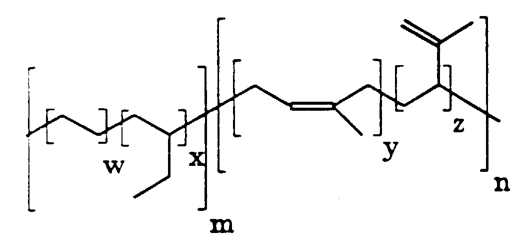

The solvent requirements are such that the polymer must remain in solution upon conversion from a partially unsaturated polyolefin to an epoxy-functional block copolymer. Nonpolar hydrocarbon solvents are well suited for this purpose and may be defined as linear-, branched-, cyclic chain aliphatic and aromatic hydrocarbons containing from 4 to 12 carbon atoms. Examples include: pentane, heptane, cyclohexane, benzene, tetralin, toluene, and xylene. The reaction medium may contain polar additives, present from the polymerization procedure at levels up to 20 percent of total solvent.

The concentration of the polymer solution is not critical, however, high viscosities will create processing difficulties. It is typical behavior for viscosity to increase with molecular weight, therefore, epoxidation of high molecular weight block copolymers is usually performed at solution concentrations ranging from 1 to 30 weight percent, preferably 5 to 20 weight percent. The reaction temperature will depend to a certain degree on the overall process conditions and desired kinetics. Excessively high temperatures, however, should be avoided since such temperatures may result in the formation of gel bodies. A reasonable temperature range for the epoxidation reaction is 0°C. to 150°C., preferably 25°C. to 80°C. Reaction times which also depend on the process conditions are generally 5 to 600 minutes, preferably, 15 to 300 minutes.

Stoichiometric epoxidation is generally accomplished with organic peracids. Examples of peracids include: peracetic, performic, perbenzoic, pertrifluoroacetic, m-chloroperbenzoic, and monoperoxyphthalic. It is possible that the selected peracid may be formed in situ or preformed before addition to the polymer solution, depending on the particular acid and/or experimental conditions employed. Synthesis of the peracids is accomplished by combining a low-molecular weight monocarboxylic acid or acid anhydride with hydrogen peroxide, usually in the presence of a strong acid catalyst such as sulfuric acid, p-toluenesulfonic acid or phosphoric acid. A cationic exchange resin may also be used as the catalytic agent. The monocarboxylic acid contains 1 to 18 carbon atoms, preferably, due to ease of handling and favorable reactivity, 1 to 9 carbon atoms. Preferred monocarboxylic acids are formic acid, acetic acid and propionic acid. A combination of monocarboxylic acids may be employed to minimize side-reactions such as combinations of formic and acetic acids in ratios ranging from 0.5:1 to 1.5:1.

The hydrogen peroxide is conveniently handled as a concentrated aqueous solution. The solution concentration of hydrogen peroxide may vary from 1 to 99 weight percent, preferably 30 weight percent. Depending on the desired reaction kinetics, product composition, and so forth, it is reasonable to specify that the H₂O₂/monocarboxylic acid molar ratio is in the range 0.1 to 10, preferably 0.25 to 5, and more preferably 0.5 to 2.

Recovery of the epoxidized polymer may be accomplished by any method such as precipitation into a nonsolvent such as methanol and isopropanol, steam stripping, and solvent evaporation. Deactivation or neutralization of the epoxidation reagents may be effected before recovery. The epoxidized product may be combined or compounded with additives such as antioxidants, fillers, glass fibers, pigments, and the like. All of these additives and the use thereof are well known in the art.

The block copolymers of the present invention may function as elastomeric epoxy resins, impact modifiers, and compatibilizers for polymer blends such as polyester/polyolefin blends. In addition, the block copolymers are reactive with a variety of functional reagents to produce additional macromolecular structures. Functionalization of a hydrocarbon polymer substrate with epoxy groups provides numerous benefits including the ability to react with a variety of functional groups during melt blending operations, enhancement of miscibility with other polymers, and resistance to oils and hydrocarbon solvents.

The materials and testing procedures used for the results shown herein are as follows:

Inherent viscosity (I.V.) was measured at 23°C. using 0.50 grams of polymer per 100 ml of a solvent consisting of 60% by weight phenol and 40% by weight tetrachloroethane.

The invention will be further illustrated by a consideration of the following examples, which are intended to be exemplary of the invention.

All parts and percentages in the examples are on a weight basis unless otherwise stated.

### EXAMPLE 1

### Isoprene-1,3-Butadiene Diblock Copolymer

Cyclohexane, purified and dried by passage in series through stainless steel columns containing activated basic alumina and 3 Å molecular sieves was added under inert argon atmosphere to a 3 liter glass-bowl reactor fitted with an impeller-type stirrer, sampling tube, and heat transfer coil. The reactor was equipped with a rubber septum port and is also serviced by monomer, solvent, and inert gas lines directly plumbed into the apparatus with needle-valves and Swagelok ® fittings. Previous pre-polymerization conditioning of the reactor was accomplished by charging 1000 mL of purified cyclohexane into the vessel, heating to 60°C., and adding 0.2 mL of diphenylethylene followed by 2.0 mL of 1.48 N sec-butyl lithium in cyclohexane via syringe to obtain a red-orange solution of living anions. Stirring the conditioning solution for 4 hours at 60°C. was adequate to prepare the reactor for anionic polymerization. The activity (i.e. molarity) of the sec-butyl lithium solution was determined by double titration technique. Isoprene, 105 mL (1.05 moles) purified in the same manner as described for cyclohexane, was charged to the reactor with differential argon pressure, stirring was commenced, and the monomer/solvent combination was heated to 60°C. To the reactor was added 4.8 mL (0.00715 moles) of 1.48 N sec-butyl lithium to initiate the polymerization of the isoprene, which was completed after 2 hours at 60°C. An aliquot of the pale yellow polyisoprenyl solution was taken for analytical testing, the second block was formed by adding 92 mL (1.05 moles) of purified 1,3-butadiene to the reaction mixture evenly over a time period of 10 minutes. Stirring the living solution for 4 hours at 60°C. allowed sufficient time for the reaction to reach completion, as evidenced by the increase in viscosity. Termination of the living block copolymer was accomplished by adding 0.2 mL of degassed methanol, 0.1 grams of Irganox 1010 were added to avoid oxidative degradation of the unsaturated substrate. The bulk polymer was recovered by precipitation into isopropanol, followed by drying in vacuo at 80°C. for 24 hours. Polydiene microstructures, obtainable from FT-IR, quantitative ¹³C NMR and ¹H NMR were 91% 1,4-addition and 9% 1,2-addition units for the polybutadiene block, and 94% 1,4-addition and 6% 3,4-addition units for the polyisoprene block. Gel permeation chromatography (GPC) was used to determine the molecular weights relative to polystyrene which were Mn (number average) = 15,500, Mw (weight average) = 17,000, and D (polydispersity) = 1.10 for the polyisoprene block, and Mn = 33,100, Mw = 35,300, and D = 1.07 for the diblock copolymer.

### EXAMPLE 2

### High Vinyl Content Isoprene-1,3-Butadiene Diblock Copolymer

Purified cyclohexane, 1000 mL, was charged to a reactor which had been conditioned as in Example 1, stirring was commenced and the temperature thermostated to 25°C. Next, 33.8 mL (0.417 moles) of tetrahydrofuran (THF) was distilled from a sodium-benzophenone ketyl solution and added to the reactor via syringe, followed by 9.5 mL (0.0952 moles) of purified isoprene. The molar ratio of THF to initiator was 35:1. Addition of 8.0 mL of 12.23% (w/w) sec-butyl lithium in cyclohexane was then performed to oligomerize the isoprene. After two hours at 25°C. a small sample was withdrawn for analysis and 288 mL (3.3 moles) of purified 1,3-butadiene was metered in over a time period of 60 minutes to form the B-block. During the feed time and for an additional two hour hold period the reaction temperature was controlled and not allowed to exceed 33°C. The highly viscous yellow solution was terminated with 0.3 mL of degassed methanol and 0.2 grams of Irganox 1010 was added to promote thermo-oxidative stability. The polymer was recovered by coagulation into methanol followed by drying at 80°C. and 5 mm for 24 hours. Microstructures of each block were determined in the same manner as set forth in Example 1. Values of 16% 1,4-addition units and 84% 3,4-addition units were obtained for the polyisoprene block, while the polybutadiene block was determined to be comprised of 26% 1,4-addition units and 74% 1,2-addition units. GPC determination of molecular weights, compared to polystyrene standards, indicated that Mn = 670, Mw = 770, and D = 1.15 for the polyisoprene segment and Mn = 35,800, Mw = 37,400, and D = 1.04 for the diblock copolymer.

### EXAMPLE 3

### Isoprene-Butadiene-Isoprene Triblock Copolymer

Purified cyclohexane, 1000 ml was charged to a reactor which had been conditioned as in Example 1, stirring was commenced and the temperature thermostated to 60°C. A syringe was used to quickly add 10.0 mL (0.0149 moles) of 1.48 N sec-butyl lithium/cyclohexane solution to the reactor, followed immediately by 44 mL (0.438 moles) of purified isoprene added over 5 minutes. After 2 hours at 60°C, a sample was taken of the polyisoprene A-block, before 240 mL (2.75 moles) of purified 1,3-butadiene was metered into the reaction vessel over a period of 20 minutes and allowed to react at 60°C. for 3 hours. A sample was taken of the resulting AB-block copolymer. Next, 44 mL (0.438 moles) of purified isoprene was added over 10 minutes and maintained at 60°C. for 2 hours to form the A-B-A triblock copolymer. The living anion was quenched with 0.5 mL of degassed isopropanol before addition of stabilizer and subsequent product recovery.
Microstructures for all of the blocks are determined to be over 90% 1,4 addition units. Molecular weights, relative to polystyrene standards, are Mn = 1170, Mw = 1440, and D = 1.23 for the polyisoprene A-block; Mn = 25,900, Mw = 27,000, and D = 1.04 for the AB-blocks; Mn = 29,400, Mw = 30,800, and D = 1.05 for the triblock copolymer.

### EXAMPLE 4

### High Vinyl Isoprene-Butadiene-Isoprene Triblock Copolymer

Dipiperidinoethane (DPIP), 0.82 mL (0.00385 moles), 1000 ml of purified cyclohexane, and 8.5 mL (0.0851 moles) of purified isoprene was charged to a reactor which had been conditioned as in Example 1, stirring was commenced and the temperature thermostated to 25°C. Sec-butyl lithium initiator (0.00193 moles) in cyclohexane solution was added to the reactor through the septum port and the reaction was allowed to proceed for two hours at 25°C. before a sample was taken of the A-block. Next, 171 mL (1.96 moles) of purified 1,3-butadiene was transferred into the reactor over a time of 30 minutes and the reaction was held at 25°C. for an additional 3 hours, before a sample was taken of the AB-block. The second polyisoprene block was formed by adding 8.5 mL (0.0851 moles) of isoprene to the living solution and the reaction was allowed to proceed for 2 hours before the viscous yellow solution was terminated with 0.1 mL of degassed isopropanol. The microstructures were over 90% 1,2 and 3,4 addition units for the polybutadiene and polyisoprene blocks, respectively. The molecular weight values for the triblock copolymer were Mn = 154,500, Mw = 159,200, and D = 1.03 in comparison to polystyrene standards.

### EXAMPLE 5

### Styrene-Butadiene-Isoprene Triblock Copolymer

Purified cyclohexane, 1000 ml was charged to a reactor which had been conditioned as in Example 1, stirring was commenced and 20 mL (0.175 moles) of purified styrene was transferred into the reactor via the septum port and the temperature was increased to 60°C., followed by 4.0 mL (0.0059 moles) of sec-butyl lithium/cyclohexane initiator solution. The reaction mixture, which turned orange immediately, was allowed to proceed for six hours at 60°C. before a sample was withdrawn of the A-block. Next, 97 mL (1.11 moles) of purified 1,3-butadiene was slowly metered into the reactor over the course of 15 minutes, during which time the solution changed from a deep orange to a faint yellow color. A significant increase in viscosity was observed as the living A-B block copolymer was allowed to form over a time of 2 hours at 60°C. and a second sample was withdrawn for analysis. The A-B-C triblock copolymer was obtained by adding 105 mL (1.05 moles) of purified isoprene to the reactor gradually over a 15 minute time period, followed by stirring the mixture at 60°C. for two additional hour. Termination of the living solution was accomplished by adding 0.1 mL of degassed methanol. Analysis by ¹H NMR indicated that both the B and C blocks have microstuctures containing over 90% 1,4 addition units with the polybutadiene block specifically containing 91% 1,4 and 9% 1,2 addition units. The molecular weights, as determined by GPC relative to polystyrene standards, were Mn = 3600, Mw = 4000, and D = 1.11 for the polystyrene A-block; Mn = 23,300, Mw = 24,500, and D = 1.05 for the polystyrene/polybutadiene diblock copolymer; Mn= 41,100, Mw = 43,900, and D = 1.07 for the polystyrene/polybutadiene/polyisoprene triblock copolymer.

### EXAMPLE 6

### Isoprene-Butadiene-Isoprene Partially Tapered-Block Copolymer

A one liter round bottom flask equipped with a magnetic stir-bar and side-arm septum port was connected to a vacuum line and flame dried to remove surface moisture. Approximately 500 mL of toluene was distilled directly into the reaction flask from a living polystyryl lithium solution. The A-block was formed by the addition of 15 grams (0.22 moles) of purified isoprene to the reactor followed by 1.0 mL (0.0015 moles) of sec-butyl lithium solution, after which the faint yellow solution was allowed to stir for 3 hours at 30°C. A sample was taken of the A-block before 30 grams (0.554 moles) of purified 1,3-butadiene and 15 grams (0.22 moles) of purified isoprene was added to the reactor simultaneously and allowed to stir for 3 hours at 30°C. The viscous reaction mixture was terminated with several drops of degassed isopropanol, stabilized with 0.5 grams of Irganox 1010, and precipitated into 1.5 liters of methanol. Drying the polymer in vacuo at 80°C, for 24 hours completed the recovery procedure. Analysis by proton NMR indicated that both the polyisoprene and polybutadiene units were added in over 90% of the 1,4 addition mode. The molecular weights of the polyisoprene A-block, as determined by GPC, were Mn = 14,100; Mw = 14,500; D = 1.03, and the combined molecular weights for the tapered polyisoprene-polybutadiene triblock copolymer were Mn = 71,900, Mw = 78,400, and D = 1.08.

### EXAMPLE 7

### Isoprene-Butadiene Tapered Star-Branched Block Copolymer

A one liter flask, outfitted and prepared in the same manner as described in Example 6, was used as a receiver to collect 500 mL of toluene that was distilled from a sodium dispersion. Five grams (0.073 moles) of purified isoprene was added to the reactor followed by 1.0 mL (0.0015 moles) of sec-butyl lithium to initiate the polymerization. After stirring at 25°C. for 30 minutes over 75% of the monomer was consumed and a small sample was collected. Next, 45 grams (0.83 moles) of 1,3-butadiene was distilled into the vessel and the reaction allowed to proceed for 6 hours to ensure complete conversion. Freshly distilled methyltrichlorosilane, 0.20 grams, (0.00135 moles) was added to couple the tapered diblock chains into a three-arm star geometry. GPC molecular weight analysis indicated that the molecular weight of the pure isoprene block were Mn = 3340, Mw = 3670, and D = 1.1. The results for the tapered diblock were Mn = 57,700, Mw = 64,600, and D = 1.12. Determination of the linking efficiency was obtained from GPC analysis and indicated that over 90% of the arms were coupled into the three-arm star species. The microstructure determination revealed that both dienes were polymerized to over 90% 1,4-enchainment.

### EXAMPLE 8

### Selective Hydrogenation of High-Vinyl Isoprene/1,3-Butadiene Diblock Copolymer

Fifty grams of the polymer prepared in Example 2 was retained in the same reactor that was used to conduct the polymerization. Additional cyclohexane which was purified by passage through a column containing basic alumina and molecular sieves was added to the reactor to bring the total solution volume up to 500 mL. The temperature was increased to 50°C. and hydrogen gas was sparged through the solution. This amount of polymer represented 0.89 moles of polybutadiene repeat units. The hydrogenation catalyst was prepared separately in a dry 100 mL round bottom two-neck flask by dissolving 0.92 grams (2.67 x 10⁻³ moles) of nickel octoate in 50 mL of purified cyclohexane. Next, 6.8 mL (8.81 x 10⁻³ moles) of a 1.33 M triethylaluminum/cyclohexane solution was added to the nickel octoate solution over a period of 30 seconds. During the addition a moderate exotherm was observed along with a change in solution color from clear green to a black, colloidal appearance. The catalyst was aged for 15 minutes before addition to the reactor. A hydrogen pressure of 50 psig (446 KPa) was instituted and maintained for 8 hours before the reaction was terminated by the addition of several mL of 6N hydrochloric acid. A few drops of Jeffamine D-2000 was added to facilitate catalyst removal. Analysis of the product by FT-IR indicated that 99% of the polybutadiene units were saturated, while a substantial portion of the polyisoprene unsaturation remained intact.

### EXAMPLE 9

### Selective Hydrogenation of Isoprene-Butadiene-Isoprene Block Copolymer

Fifty-two grams of the polymer prepared in Example 3 was retained in the polymerization reactor, which also served as the hydrogenation vessel. Toluene, which had been dried by passage through a column containing molecular sieves was added in the amount of 750 mL to bring the total solution volume up to one liter. The temperature was increased to 90°C. and hydrogen gas was bubbled through the solution for 15 minutes. This amount of polymer represented 0.69 moles of polybutadiene repeat units. The hydrogenation catalyst was prepared in the same manner as described in the previous example by dissolving 0.64 grams (2.07 x 10⁻³ moles) of cobalt octoate (19% active Co, w/w) in 50 mL of dry cyclohexane. Next, 6.7 mL (0.0104 moles) of a 15.13 weight% solution of n-butyl lithium in hexane was added over a time period of 60 seconds. The solution immediately changed from a dark blue to black color accompanied by a moderate exotherm. After 15 minutes the catalyst was added via syringe to the reactor and a hydrogen pressure of 50 psig (446 KPa) was maintained for 8 hours at 90°C. The polymer, which developed crystallinity during the course of the reaction, remained in the toluene solution at this temperature. Analysis by both ¹H and ¹³C NMR indicated that over 98% of the polybutadiene units were saturated, while in excess of 75% of the polyisoprene units remain intact.

### EXAMPLE 10

### Epoxidation of Isoprene-Ethylene/1-Butene Diblock Copolymer

The diblock copolymer synthesized in Example 2 and hydrogenated in Example 8 was epoxidized with performic acid generated in situ. A toluene solution containing 25 grams (0.0129 moles of isoprene units) of the diblock copolymer in 500 mL of toluene was charged to a 1000 mL round bottom flask equipped with an overhead 316 SS paddle-type stirrer, heating mantle, nitrogen inlet, and reflux condenser. The temperature was raised to 50°C. and 2.0 grams (0.039 moles) of 88 weight percent formic acid was added, followed by the dropwise addition of 3.9 mL (0.039 moles) of 30 weight percent hydrogen peroxide. Conditions for this example are approximately a 3X stoichiometric excess of performic acid/double bond. After 6 hours at 50°C. the clear green solution was poured into 1500 mL of methanol to precipitate the polymer. The recovery procedure was completed by drying the polymer at 80°C. for 24 hours under reduced pressure. Analysis of the product by ¹H NMR indicated that over 90% of the unsaturated units were epoxidized.

### EXAMPLE 11

### Epoxidation of Isoprene-b-Ethylene/1-Butene-b-Isoprene Triblock Copolymer

The triblock copolymer synthesized in Example 3 and hydrogenated in Example 9 was epoxidized with performic acid. A toluene solution containing 50 grams (-0.21 moles isoprenyl double bonds) of the triblock copolymer in 500 mL of dry toluene was charged to a 1-liter round bottom flask equipped with an overhead 316 SS paddle-type stirrer, heating mantle, argon inlet, and reflux condenser. The solution was heated to 60°C. and 43.9 grams (0.840 moles) of 88 weight percent formic acid is added. Next, 94.8 grams (0.840 moles) of H₂O₂ (30 weight% in water) was slowly added to the reaction vessel over the course of 5 minutes. A 4:1 molar ratio of performic acid to double bonds was obtained. The reaction was allowed to proceed for 8 hours at 60°C. before the mixture was poured into 2 liters of methanol to precipitate the polymer, which was dried in vacuo for 24 hours at 75°C. Analysis of the product by ¹H NMR indicated that over 50% of the unsaturated polyisoprene units were epoxidized.

The following examples indicate that an epoxidized polyisoprene unit is reactive with a typical polyester during melt processing conditions. The copolyester used in the following examples is a commercial grade PETG containing 30 mole percent of 1,4-cyclohexanedimethanol with an IV of 0.74.

### EXAMPLE 12

### Control Blend of PET Copolyester and Polyisoprene (80:20)

A total of 48 grams of the copolyester and 12 grams of a polyisoprene (Mn=72,000; D=1.1) were dried separately under vacuum with a nitrogen sparge at 75°C. for 24 hours. Microstructural composition of the polyisoprene was 94 mole percent 1,4- and 5 mole% 3,4-addition units. The components were combined and the dry mixture was melt blended in a Haake-Buchler torque rheometer equipped with a 60 gram mixing bowl. Melt processing was conducted at 230°C. for 10 minutes at 50 RPM. Torque buildup verses time of the melt phase reaction is listed in Table I. The data in Table I clearly indicates that no increase in torque occurred after one minute, which is indicative of no molecular weight increases due to the occurrence of melt phase reactions. Thus, the polyisoprene was not reactive with the copolyester during melt blending.

The epoxidized polyisoprene (Mn=58,400; D=2.8) referred to in Examples 13 and 14 contains 94% 1,4- and 6% 3,4-addition units and is substituted to a level of 46 mole percent oxirane groups.

### EXAMPLE 13

### Blend of PET Copolyester and Epoxidized Polyisoprene (90:10)

A total of 54 grams of PET copolyester and 6 grams of epoxidized polyisoprene were dried separately under vacuum with a nitrogen sparge at 75°C. for 24 hours. The components were combined and the dry mixture was melt blended in a Haake-Buchler torque rheometer equipped with a 60 gram mixing bowl. Melt processing was conducted at 230°C. for 10 minutes at 50 RPM. Torque buildup verses time of the melt phase reaction is listed in Table II. The data in Table II clearly indicates that a significant increase in torque occurred after one minute, which is indicative of molecular weight increases due to the occurrence of melt phase reactions. The increase in torque is indicative of a melt phase reaction between the blend components, resulting in a build-up of molecular weight.

### EXAMPLE 14

### Blend of PET Copolyester and Epoxidized Polyisoprene (80:20)

A total of 48 grams of the copolyester and 12 grams of epoxidized polyisoprene were dried separately under vacuum with a nitrogen sparge at 75°C. for 24 hours. The components were combined and the dry mixture was melt blended in a Haake-Buchler torque rheometer equipped with a 60 gram mixing bowl. Melt processing was conducted at 230°C. for 10 minutes at 50 RPM. Torque buildup verses time of the melt phase reaction is listed in Table III. The data in Table III clearly indicates that a significant increase in torque occurred after one minute, which is indicative of molecular weight increases due to the occurrence of melt phase reactions. The increase in torque is indicative of a melt phase reaction between the blend components, resulting in a build-up of molecular weight.

The following examples illustrate that an epoxidized polyisoprene-b-ethylene/1-butene diblock copolymer is an effective emulsifier for polyester/polyolefin blends.

### EXAMPLE 15

### Blend of PETG Copolyester and Polypropylene (80:20)

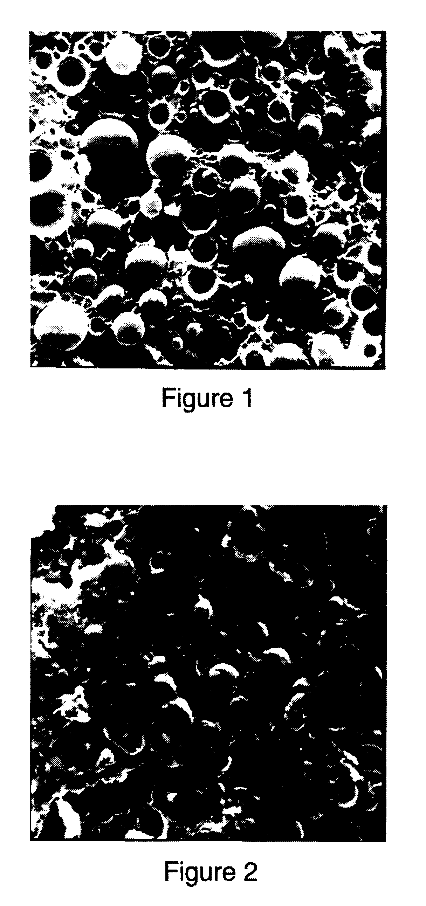

A total of 48 grams of PETG copolyester, containing approximately 30 mole percent cyclohexanedimethanol, and 12 grams of an impact grade of polypropylene (MFI = 1.8) containing 15 weight percent ethylene were dried separately under vacuum for 24 hours at 80°C. The components were combined, forming an 80:20 weight ratio of copolyester to polypropylene, and the dry mixture was melt blended in a Haake-Buchler torque rheometer equipped with a 60 gram mixing bowl. Melt processing was performed at 230°C. for 10 minutes at 50 RPM. Analysis of the blend by a scanning electron microscope, provided in Figure 1, shows the dispersed phase domains have diameters up to 8 microns. There is also considerable voiding on the fracture surface, indicative of poor interfacial adhesion.

### EXAMPLE 16

### Tricomponent Blend of PET Copolyester, Polypropylene, and Epoxidized Polyisoprene-b-Ethylene/1-Butene Diblock Copolymer (75:20:5)

A total of 45 grams of PETG copolyester, 12 grams of an impact grade polypropylene (MFI=1.8) containing 15 weight percent ethylene, and 3 grams of the epoxidized diblock copolymer prepared in Example 10, were dried separately in vacuo with a nitrogen sparge for 24 hours at 75°C. The dry components were combined, resulting in a 75:25:5 weight ratio of copolyester to polypropylene to compatibilizer, and the mixture was melt blended in a Haake-Buchler torque rheometer equipped with a 60 gram mixing bowl. Melt processing was performed at 230°C. for 10 minutes at 50 RPM. Analysis of the blend by a scanning electron microscope, as shown in Figure 2, indicated that the dispersed phase was evenly distributed in the matrix with only a few isolated particles having diameters up to 3 microns. There is little voiding on the fracture surface, which is indicative of excellent interfacial adhesion.

**TABLE I**

| Torque Buildup Verses Time of the Melt Phase Reaction | |
|---|---|
| TIME (sec.) | TORQUE |
| 0: 0 | 0 |
| 0:12 | 264 |
| 0:24 | 2295 |
| 0:36 | 2301 |
| 0:48 | 1321 |
| 1: 0 | 1022 |
| 1:12 | 851 |
| 1:24 | 821 |
| 1:36 | 873 |
| 1:48 | 937 |
| 2: O | 1023 |
| 2:12 | 1032 |
| 2:24 | 1005 |
| 2:36 | 992 |
| 2:48 | 1023 |
| 3: 0 | 1000 |
| 3:12 | 1001 |
| 3:24 | 996 |
| 3:36 | 995 |
| 3:48 | 983 |
| 4: 0 | 960 |
| 4:12 | 933 |
| 4:24 | 964 |
| 4:36 | 969 |
| 4:48 | 942 |
| 5: 0 | 924 |

**TABLE II**

| Torque Buildup Verses Time of the Melt Phase Reaction | |
|---|---|
| TIME (sec.) | TORQUE |
| 0: 0 | 91 |
| 0:12 | 339 |
| 0:24 | 2200 |
| 0:36 | 2199 |
| 0:48 | 1843 |
| 1: 0 | 1792 |
| 1:12 | 1829 |
| 1:24 | 1858 |
| 1:36 | 1772 |
| 1:48 | 1624 |
| 2: 0 | 1527 |
| 2:12 | 1475 |
| 2:24 | 1392 |
| 2:36 | 1397 |
| 2:48 | 1336 |
| 3: 0 | 1314 |
| 3:12 | 1291 |
| 3:24 | 1264 |
| 3:36 | 1250 |
| 3:48 | 1205 |
| 4: 0 | 1183 |
| 4:12 | 1135 |
| 4:24 | 1141 |
| 4:36 | 1130 |
| 4:48 | 1102 |
| 5: 0 | 1089 |

**TABLE III**

| Torque Buildup Verses Time of the Melt Phase Reaction | |
|---|---|
| TIME (sec.) | TORQUE |
| 0: 0 | 73 |
| 0:12 | 187 |
| 0:24 | 1133 |
| 0:36 | 1132 |
| 0:48 | 1553 |
| 1: 0 | 1797 |
| 1:12 | 1746 |
| 1:24 | 1755 |
| 1:36 | 1811 |
| 1:48 | 1779 |
| 2: 0 | 1721 |
| 2:12 | 1627 |
| 2:24 | 1582 |
| 2:36 | 1492 |
| 2:48 | 1437 |
| 3: 0 | 1373 |
| 3:12 | 1344 |
| 3:24 | 1305 |
| 3:36 | 1294 |
| 3:48 | 1263 |
| 4: 0 | 1246 |
| 4:12 | 1209 |
| 4:24 | 1208 |
| 4:36 | 1220 |
| 4:48 | 1164 |
| 5: 0 | 1151 |

## Claims

1. A process for preparing a selectively hydrogenated polydiene block copolymer with regiospecifically placed epoxy groups, which is useful as a compatibilizer for polymer blends, said process comprising the following steps:
(I) polymerizing a conjugated diolefin in a solvent selected from the group consisting of polar and nonpolar solvents under anionic polymerization conditions to form a living polydiene;
(II) combining the polydiene of Step (I) with a conjugated diolefin having a degree of substitution different than the conjugated diolefin of Step (I) to form a block copolymer;
(III) reacting the block copolymer of Step (II) with hydrogen gas in the presence of a soluble transition metal catalyst and an organometallic reducing agent to form a selectively hydrogenated block copolymer wherein the less substituted blocks are at least 98% hydrogenated;
(IV) epoxidizing the unsaturated sites of the non-hydrogenated blocks.

2. A hydrogenated polydiene block copolymer with regiospecifically placed epoxy groups prepared by the process of Claim 1.

3. The process according to Claim 1 wherein the nonpolar solvent is selected from the group consisting of acyclic and cyclic hydrocarbons containing 4 to 12 carbons atoms, and aromatic and alkyl substituted aromatic hydrocarbons containing 6 to 12 carbon atoms.

4. The process according to Claim 3 wherein the nonpolar solvent is selected from the group consisting of cyclohexane, heptane, benzene, toluene, tetralin, xylene, and mixtures thereof.

5. The process according to Claim 1 wherein the polar solvent is selected from the group consisting of ethers, amines, and mixtures thereof.

6. The process according to Claim 1 wherein the anionic polymerization reaction of the conjugated diolefin is conducted at a temperature in the range of -100°C. to 200°C.

7. The process according to Claim 6 wherein the anionic polymerization is conducted at a temperature in the range of 0°C. to 100°C.

8. The process according to Claim 7 wherein the anionic polymerization is conducted at a temperature in the range of 25°C. to 75°C.

9. The process according to Claim 1 wherein the conjugated diolefin monomer has the formula: 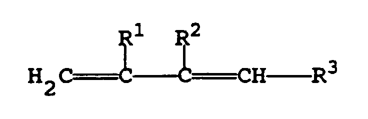 wherein R¹, R² and R³ are independently selected from the group consisting of hydrogen, alkyl, aryl, halogen, alkyl ether, and aryl ether.

10. The process according to Claim 9 wherein the conjugated diolefin monomer is selected from the group consisting of isoprene, 1,3-butadiene, 1,3-pentadiene 2,3-dimethyl-1,3-butadiene, 2-methyl-1,3-pentadiene, 1,3-hexadiene, 2-chloro-1,3-butadiene, 2-phenyl-1,3-butadiene, myrcene 2,3-diphenyl-1,3-butadiene and mixtures thereof.

11. The process according to Claim 1 wherein the molecular weight of the more substituted polydiene block is lower than the molecular weight of the less substituted polydiene block.

12. The process according to Claim 11 wherein the molecular weight of the less substituted polydiene block is 1000 to 1,000,000 daltons.

13. The process according to Claim 12 wherein the molecular weight of the less substituted polydiene block is 5000 to 500,000 daltons.

14. The process according to Claim 13 wherein the molecular weight of the less substituted polydiene block is 10,000 to 250,000 daltons.

15. The process according to Claim 11 wherein the molecular weight of the more substituted polydiene block is 100 to 250,000 daltons.

16. The process according to Claim 15 wherein the molecular weight of the more substituted polydiene block is 300 to 100,000 daltons.

## Patentansprüche

1. Verfahren zur Herstellung eines selektiv hydrierten Polydien-Blockcopolymeren mit regiospezifisch angeordneten Epoxygruppen, welches als ein Compatibilisator für Polymerblends brauchbar ist, wobei das Verfahren die folgenden Schritte umfaßt:
(I) Polymerisieren eines konjugierten Diolefins in einem Lösemittel, gewählt aus der polare und nichtpolare Lösemittel umfassenden Gruppe, unter anionischen Polymerisationsbedingungen zur Bildung eines lebenden Polydiens;
(II) Vereinigen des Polydiens von Schritt (I) mit einem konjugierten Diolefin mit einem Substitutionsgrad, der sich von dem des konjugierten Diolefins von Schritt (I) unterscheidet, zur Bildung eines Blockcopolymeren;
(III) Umsetzen des Blockcopolymeren des Schrittes (II) mit Wasserstoffgas in Gegenwart eines löslichen Übergangsmetallkatalysators und eines organometallischen Reduktionsmittels zur Bildung eines selektiv hydrierten Blockcopolymeren, wobei die weniger substituierten Blöcke mindestens zu 98% hydriert sind;
(IV) Epoxidieren der ungesättigten Stellen der nicht hydrierten Blöcke.

2. Hydriertes Polydien-Blockcopolymer mit regiospezifisch angeordneten Epoxygruppen, hergestellt gemäß dem Verfahren von Anspruch 1.

3. Verfahren gemäß Anspruch 1, wobei das nichtpolare Lösemittel gewählt wird aus der Gruppe bestehend aus acyclischen und cyclischen Kohlenwasserstoffen mit 4 bis 12 Kohlenstoffatomen und aromatischen und Alkyl-substituierten aromatischen Kohlenwasserstoffen mit 6 bis 12 Kohlenstoffatomen.

4. Verfahren gemäß Anspruch 3, wobei das nichtpolare Lösemittel gewählt wird aus der Gruppe bestehend aus Cyclohexan, Heptan, Benzol, Toluol, Tetralin, Xylol und Mischungen davon.

5. Verfahren gemäß Anspruch 1, wobei das polare Lösemittel gewählt wird aus der Gruppe bestehend aus Ethem, Aminen und Mischungen davon.

6. Verfahren gemäß Anspruch 1, wobei die anionische Polymerisationsreaktion des konjugierten Diolefins bei einer Temperatur im Bereich von -100°C bis 200°C durchgeführt wird.

7. Verfahren gemäß Anspruch 6, wobei die anionische Polymerisation bei einer Temperatur im Bereich von 0°C bis 100°C durchgeführt wird.

8. Verfahren gemäß Anspruch 7, wobei die anionische Polymerisation bei einer Temperatur im Bereich von 25°C bis 75°C durchgeführt wird.

9. Verfahren gemäß Anspruch 1, wobei das konjugierte Diolefinmonomer die folgende Formel besitzt. 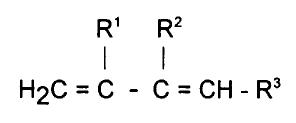 worin R¹, R² und R³ unabhängig gewählt werden aus der aus Wasserstoff, Alkyl, Aryl, Halogen, Alkylether und Arylether umfassenden Gruppe.

10. Verfahren gemäß Anspruch 9, wobei das konjugierte Diolefinmonomer aus der aus folendem bestehenden Gruppe gewählt wird: Isopren, 1,3-Butadien, 1,3-Pentadien, 2,3-Dimethyl-1,3-butadien, 2-Methyl-1,3-pentadien, 1,3-Hexadien, 2-Chlor-1,3-butadien, 2-Phenyl-1,3-butadien, Myrcen-2,3-diphenyl-1,3-butadien und Mischungen davon.

11. Verfahren gemäß Anspruch 1, wobei das Molekulargewicht des stärker substituierten Polydienblocks niedriger als das Molekulargewicht des weniger substituierten Polydienblocks ist.

12. Verfahren gemäß Anspruch 11, wobei das Molekulargewicht des weniger substituierten Polydienblocks 1 000 bis 1 000 000 Dalton beträgt.

13. Verfahren gemäß Anspruch 12, wobei das Molekulargewicht des weniger substituierten Polydienblocks 5 000 bis 500 000 Dalton beträgt.

14. Verfahren gemäß Anspruch 13, wobei das Molekulargewicht des weniger substituierten Polydienblocks 10 000 bis 250 000 Dalton beträgt.

15. Verfahren gemäß Anspruch 11, wobei das Molekulargewicht des stärker substituierten Polydienblocks 100 bis 250 000 Dalton beträgt.

16. Verfahren gemäß Anspruch 15, wobei das Molekulargewicht des stärker substituierten Polydienblocks 300 bis 100 000 Dalton beträgt.

## Revendications

1. Procédé de préparation d'un copolymère séquencé de polydiène sélectivement hydrogéné présentant des groupement époxy placés de façon régiospécifique, qui sont utiles en tant qu'agent de compatibilité destinés aux mélanges de polymères, ledit procédé comprenant les étapes suivantes :
(I) la polymérisation d'une dioléfine conjuguée dans un solvant choisi dans le groupe constitué des solvants polaires et non polaires, dans des conditions de polymérisation anionique pour former un polydiène vivant ;
(II) l'association du polydiène de l'étape (I) avec une dioléfine conjuguée ayant un degré de substitution différent de celui de la dioléfine conjuguée de l'étape (I) pour former un copolymère séquencé ;
(III) la réaction du copolymère séquencé de l'étape (II) avec de l'hydrogène gazeux en présence d'un catalyseur de type métal de transition soluble et d'un agent réducteur organométallique pour former un copolymère séquencé sélectivement hydrogéné dans lequel les séquences moins substituées sont hydrogénées à au moins 98 %;
(IV) l'époxydation des sites insaturés des séquences non hydrogénées.

2. Copolymère séquencé de polydiène hydrogéné présentant des groupements époxy placés de façon régiospécifique, préparé par le procédé selon la revendication 1.

3. Procédé selon la revendication 1, dans lequel le solvant non polaire est choisi dans le groupe constitué des hydrocarbures acycliques et cycliques contenant de 4 à 12 atomes de carbone et des hydrocarbures aromatiques et aromatiques alkyle-substituées contenant de 6 à 12 atomes de carbone.

4. Procédé selon la revendication 3, dans lequel le solvant non polaire est choisi dans le groupe constitué du cyclohexane, de l'heptane, du benzène, du toluène, de la tétraline, du xylène et de leurs mélanges.

5. Procédé selon la revendication 1, dans lequel le solvant polaire est choisi dans le groupe constitué des éthers, des amines et de leurs mélanges.

6. Procédé selon la revendication 1, dans lequel la réaction de polymérisation anionique de la dioléfine conjuguée est réalisée à une température comprise dans la gamme de -100°C à 200°C.

7. Procédé selon la revendication 6, dans lequel la polymérisation anionique est réalisée à une température comprise dans la gamme de 0°C à 100°C.

8. Procédé selon la revendication 7, dans lequel la polymérisation anionique est réalisée à une température comprise dans la gamme de 25°C à 75°C.

9. Procédé selon la revendication 1, dans lequel le monomère de dioléfine conjuguée a la formule : 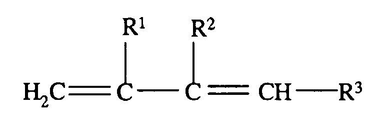 dans laquelle R¹, R² et R³ sont choisis indépendamment dans le groupe constitué de l'hydrogène, des alkyles, des aryles, des halogènes, des alkyléthers et des aryléthers.

10. Procédé selon la revendication 9, dans lequel le monomère de dioléfine conjuguée est choisi dans le groupe constitué de l'isoprène, du 1,3-butadiène, du 1,3-pentadiène, du 2,3-diméthyl-1,3-butadiène, du 2-méthyl-1,3-pentadiène, du 1,3-hexadiène, du 2-chloro-1,3-butadiène, du 2-phényl-1,3-butadiène, du myrcène, du 2,3-diphényl-1,3-butadiène et de leurs mélanges.

11. Procédé selon la revendication 1, dans lequel le poids moléculaire de la séquence de polydiène plus substituée est inférieur au poids moléculaire de la séquence de polydiène moins substituée.

12. Procédé selon la revendication 11, dans lequel le poids moléculaire de la séquence de polydiène moins substituée est compris entre 1000 et 1 000 000 daltons.

13. Procédé selon la revendication 12, dans lequel le poids moléculaire de la séquence de polydiène moins substituée est compris entre 5 000 et 500 000 daltons.

14. Procédé selon la revendication 13, dans lequel le poids moléculaire de la séquence de polydiène moins substituée est compris entre 10 000 et 250 000 daltons.

15. Procédé selon la revendication 11, dans lequel le poids moléculaire de la séquence de polydiène plus substituée est compris entre 100 et 250 000 daltons.

16. Procédé selon la revendication 15, dans lequel le poids moléculaire de la séquence de polydiène plus substituée est compris entre 300 et 100 000 daltons.
